Europäisches Patentamt

European Patent Office

Office européen des brevets

(19)

(11) Numéro de publication : **0 282 399 B1**

## (12) FASCICULE DE BREVET EUROPEEN

(45) Date de publication du fascicule du brevet :
27.12.91 Bulletin 91/52

(51) Int. Cl.⁵ : **H04B 10/22, H04J 14/00**

(21) Numéro de dépôt : **88400479.7**

(22) Date de dépôt : **01.03.88**

(54) **Système de recueil, par une station fixe, de données transmises par voie optique par n stations mobiles.**

(30) Priorité : 06.03.87 FR 8703071

(43) Date de publication de la demande :
14.09.88 Bulletin 88/37

(45) Mention de la délivrance du brevet :
27.12.91 Bulletin 91/52

(84) Etats contractants désignés :
DE GB IT

(56) Documents cités :
EP-A- 0 142 427
EP-A- 0 149 286
FR-A- 2 350 010
FR-A- 2 547 072
US-A- 4 570 062

(73) Titulaire : **THOMSON-CSF**
**51, Esplanade du Général de Gaulle**
**F-92800 Puteaux (FR)**

(72) Inventeur : **Meyzonnette, Jean-Louis**
**THOMSON-CSF SCPI 19, avenue de Messine**
**F-75008 Paris (FR)**
Inventeur : **Couderc, Georges**
**THOMSON-CSF SCPI 19, avenue de Messine**
**F-75008 Paris (FR)**
Inventeur : **Malard, Marcel**
**THOMSON-CSF SCPI 19, avenue de Messine**
**F-75008 Paris (FR)**

(74) Mandataire : **El Manouni, Josiane et al**
**THOMSON-CSF SCPI**
**F-92045 PARIS LA DEFENSE CEDEX 67 (FR)**

## Description

La présente invention concerne un système de recueil, par une station fixe, de données transmises par voie optique par n stations mobiles.

A titre d'exemple la station fixe peut être située au sol ou être constituée par des bâtiments en évolution lente sur mer, et les stations mobiles peuvent être constituées par des aéronefs.

Selon le brevet français n° 7701990 déposé au nom de la Demanderesse, on sait établir une liaison par transmission optique entre une station fixe (ou semi-fixe) équipée d'un émetteur-récepteur et une station mobile équipée d'un rétroréflecteur modulable.

Disposant toujours d'une station fixe équipée d'un émetteur-récepteur unique, on sait a fortiori établir une telle liaison avec plusieurs stations mobiles en procédant séquentiellement.

La présente invention a au contraire pour objet un système permettant à une station fixe, ou semi-fixe, de recevoir simultanément des données transmises par n stations mobiles.

De tels systèmes nécessitent par ailleurs de remplir, outre les fonctions d'émission ou de réception proprement dites, une fonction de maintien en permanence de l'orientation du faisceau émis dans la direction des stations mobiles au fur et à mesure de leur évolution.

Suivant le brevet français n° 7701990 précité cette fonction est entièrement assurée par un système auxiliaire associé à l'émetteur-récepteur de la station fixe.

Suivant la présente invention, au contraire, cette fonction est partiellement réalisée par l'émetteur-récepteur équipant la station fixe.

Un système de recueil, par une station fixe, de données transmises par voie optique par n stations mobiles suivant l'invention est essentiellement caractérisé en ce qu'il comporte :
— dans la station fixe, une source d'émission unique, apte à générer une onde lumineuse de fréquence porteuse F, et un récepteur unique, associés à des moyens de multiplexage spatial ou temporel selon n faisceaux respectivement affectés aux n stations mobiles, à des moyens d'orientation de chacun de ces n faisceaux selon une direction de visée déterminée, et à des moyens de commande de ces moyens d'orientation, coopérant avec le récepteur unique, de manière à faire coïncider cette direction de visée avec la position de la station mobile correspondante au fur et à mesure de l'évolution de celle-ci ;
— dans chacune des stations mobiles, un rétroréflecteur associé à un modulateur ayant une loi de modulation de la fréquence porteuse F décodable par le récepteur unique, et telle que les données ainsi transmises par chacune des stations mobiles puissent être individualisées.

D'autres objets et caractéristiques de l'invention apparaîtront plus clairement à la lecture de la description suivante d'exemples de réalisation, faite en relation avec les dessins ci-annexés dans lesquels :
— la figure 1 est un schéma montrant l'architecture générale du système ;
— la figure 2 est un schéma de la partie optique de l'émetteur-récepteur unique situé dans la station fixe ainsi que des moyens de multiplexage et d'orientation de faisceaux associés à cette partie optique ;
— la figure 3 montre une variante de réalisation des moyens de multiplexage ;
— la figure 4 est un schéma du rétroréflecteur modulable équipant les stations mobiles ;
— la figure 5 est un schéma de la partie électronique du récepteur situé dans la station fixe.

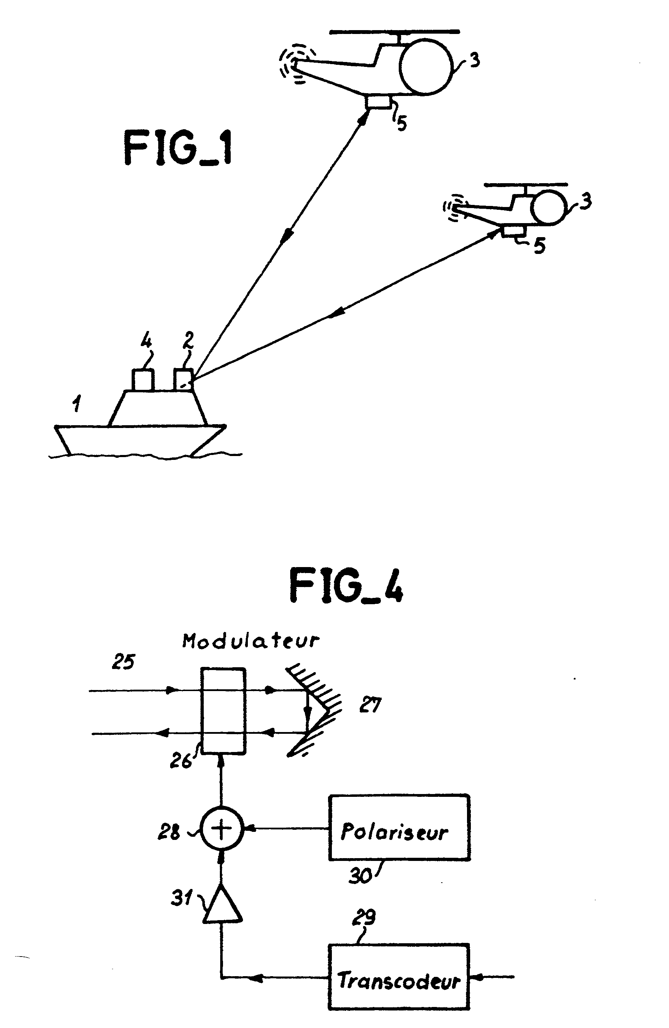

Dans l'exemple de la figure 1, un bateau 1, constituant une station lentement mobile, est équipé d'une source d'émission unique (non représentée) apte à générer une onde lumineuse de fréquence porteuse F et d'un récepteur unique (non représenté), d'une tourelle 2 comportant des moyens de multiplexage spatial selon n faisceaux respectivement affectés aux n stations mobiles et d'orientation de chacun de ces n faisceaux en direction de l'une des n stations mobiles, (constituées en l'occurrence par deux hélicoptères 3), et d'une tourelle 4 comportant des moyens de pré-acquisition des n stations mobiles, tels que télévision ou F.L.I.R. (Forward Looking Infrared) par exemple.

Les moyens d'orientation de chacun des n faisceaux sont commandés de manière à faire coïncider cette orientation avec la direction de la station mobile correspondante au fur et à mesure de l'évolution de celle-ci.

Chacune des stations mobiles 3 est équipée d'un ensemble 5 rétroflecteur-modulateur permettant de réfléchir le faisceau reçu de la station fixe 1 dans sa propre direction, et de moduler la fréquence porteuse F de l'onde émise par les données à transmettre selon une loi de modulation décodable par le récepteur unique (localisé dans la station fixe) et telle que les données ainsi transmises par chacune des n stations mobiles puissent être individualisées.

A titre d'exemple la source d'émission localisée à bord de la station fixe peut être constituée par un laser $CO_2$ fonctionnant en onde entretenue pure. La loi de modulation pourra être un codage du type FSK (Frequency Shift Keing, ou modulation par sauts de fréquence). Le récepteur pourra être du type hétérodyne ; il pourrait aussi être du type à détection directe si les portées et les débits désirés ne sont pas trop élevés.

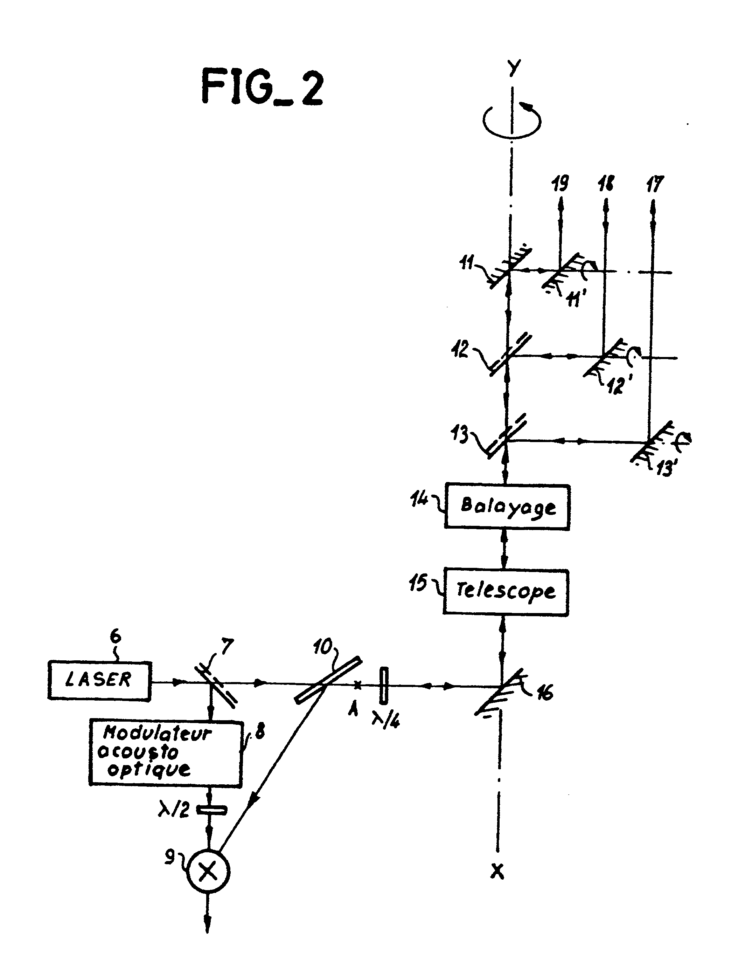

Sur la figure 2 on a représenté de manière plus détaillée la partie optique de l'émetteur-récepteur unique localisé dans la station fixe, ainsi que les moyens de multiplexage et d'orientation de faisceaux associés à cette partie optique.

Dans cette partie optique on trouve :

— un laser d'émission 6 ;

— une lame semi-transparente 7 prélevant le faisceau servant d'oscillateur local (O.L.) pour la réception ;

— un modulateur acousto-optique 8 transposant la fréquence du laser d'une quantité correspondant à la fréquence intermédiaire (F.I.) choisie pour la partie électronique du récepteur (non représentée sur cette figure) ;

— un photo-mélangeur 9 permettant d'obtenir le battement inférieur entre l'onde oscillateur local ainsi transposée à fréquence intermédiaire, et l'onde reçue, séparée de l'onde émise par une lame séparatrice émission-réception, dite de Brewster, 10.

Cette séparation est obtenue, selon l'art connu, de la façon suivante.

A l'émission, une lame $\lambda/4$ transforme la polarisation rectiligne du faisceau émis par le laser 6 en polarisation circulaire. Toute réflexion renversant le sens de cette dernière polarisation, celle du faisceau reçu sera, lors de son passage sur la lame $\lambda/4$, transformée en rectiligne dont l'azimut a tourné de 90° par rapport à celle du laser 6. C'est cette particularité qui permet la séparation des faisceaux émis et reçus au niveau de la lame de Brewster.

Une lame $\lambda/2$ interposée sur le trajet du faisceau oscillateur local fait tourner de 90° l'azimut de polarisation du faisceau émis par le laser 6 ce qui permet aux faisceaux oscillateur local et signal d'être, comme requis, dans le même état de polarisation.

Au delà de cette lame 10 de séparation émission-réception, les voies optiques d'émission et de réception sont communes et comportent :

— un miroir de renvoi fixe 16 ;

— un télescope 15 ;

— un dispositif de balayage 14 qui pourra être soit du type opto-mécanique, soit du type à commande électronique, tel que décrit par exemple dans le brevet français n° 8309007 déposé au nom de la Demanderesse ;

— une association de lames semi-transparentes et de miroirs, regroupant, dans le cas n = 3 considéré à titre d'exemple, une première lame semi-transparente 13 de coefficient de réflexion R = 1/3 et de coefficient de transmission T = 2/3, une deuxième lame semi-transparente 12 de coefficient de réflexion R = 1/2 et de coefficient de transmission T = 1/2, et un miroir 11.

Chacun des éléments 11-12-13 reçoit en son centre l'axe du faisceau commun et est mobile en rotation autour de l'axe XY du faisceau commun. Ceci permet l'orientation indépendante en gisement des trois sous-faisceaux 17, 18, 19 ainsi obtenus et par là même une poursuite en gisement des stations mobiles.

Des miroirs 11', 12', 13' sont par ailleurs indépendamment mobiles en rotation autour de l'axe du sous-faisceau incident sur leur centre. Ceci permet une orientation indépendante en site des trois sous-faisceaux 17, 18, 19 et par là même une poursuite en site des stations mobiles.

Comme on le verra par la suite c'est la partie électronique du récepteur qui élabore les ordres nécessaires à la poursuite simultanée des n stations mobiles.

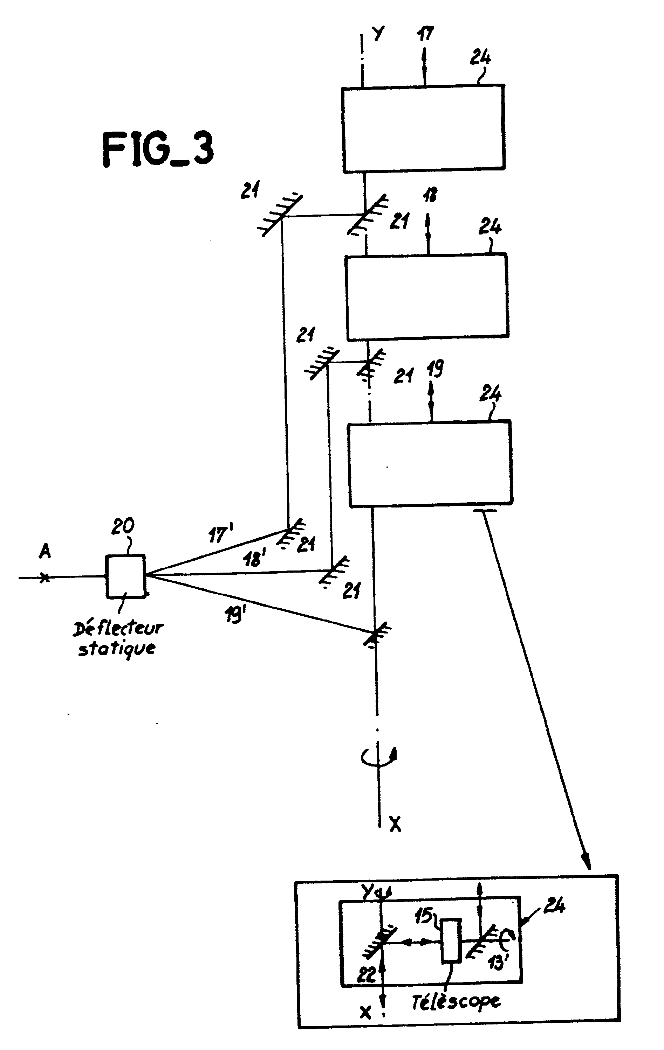

La figure 3 représente une variante de réalisation des moyens de multiplexage évitant les pertes introduites à la réception par les lames semi-transparentes 12 et 13.

Le multiplexage et les mouvements de balayage des sous-faisceaux 17, 18, 19 sont effectués ici séquentiellement par un déflecteur statique 20. Un exemple de déflecteur statique est décrit dans le brevet français n° 8309007 déjà cité. Ce dispositif permet un adressage rapide et aléatoire de directions de l'espace préalablement déterminées telles que 17', 18', 19'. Ce dispositif assure également les mouvements de balayage nécessaires autour de ces directions moyennes.

Un ensemble de miroirs fixes 21 renvoient chacun de ces sous-faisceaux sur l'axe commun XY de rotation en gisement de trois sous-ensembles 24.

Comme représenté par ailleurs sur cette figure, chacun des modules 24 comporte un miroir mobile 22 centré sur l'axe commun XY et pouvant tourner autour de celui-ci, ce qui permet une orientation individuelle en gisement.

Chacun des sous-ensembles 24 comporte, en plus du miroir 22, un télescope 15 identique à celui de la figure précédente et un miroir 13' mobile dans les mêmes conditions que celui de la figure 2, ce qui permet une orientation individuelle en site.

On notera enfin que, sans sortir de l'esprit de cet exemple, ni de celui de l'invention, le dispositif 20 de la figure 3 pourrait être remplacé par tout ensemble assurant la division spatiale du faisceau émis et la recombinaison des faisceaux incidents.

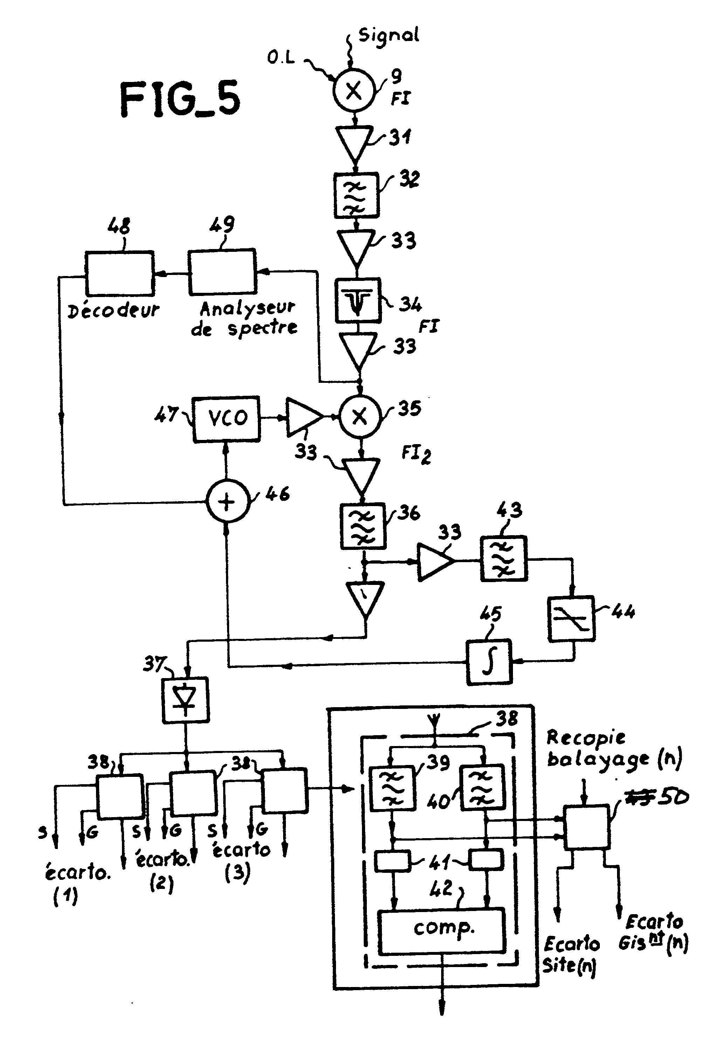

La figure 4 représente le rétroflecteur modulable équipant chacune des stations mobiles.

Le type de modulation choisi est celui par sauts de fréquence sur sous porteuse modulant la porteuse en amplitude (FSK-AM), dans lequel deux fréquences $f_{0n}$ et $f_{1n}$ sont affectées respectivement au bit 0 et au bit 1. Le couple $f_{0n}$, $f_{1n}$ est caractéristique de la $n^{ième}$ station mobile.

Les informations à transmettre, codées selon l'un des formats habituels (NRZ par exemple) sont reprises par un transcodeur 29 qui les code en FSK. Les signaux correspondants sont envoyés, par un amplificateur 31 à un modulateur 26. Ce modulateur sera, à titre d'exemple, du type à effet Stark comme décrit dans le brevet français n° 8103990 déposé au nom de la Demanderesse.

Le faisceau 25 reçu de la station fixe traverse une première fois le modulateur 26, puis est renvoyé par un rétroréflecteur 27 ("coin de cube" simple ou multiple par exemple) à la station fixe en traversant une seconde fois le modulateur.

La tension de polarisation nécessaire, issue d'un bloc 30, est ajoutée par un additionneur 28 au signal provenant du transcodeur 29 pour adapter le milieu "Stark" à la longueur d'onde incidente.

Sans s'écarter de l'esprit de l'invention les informations pourraient également être transmises en modulation tout ou rien (O.O.K, ou On Off Keging). Il serait alors nécessaire d'adopter, pour la transmission des bits 0 ou 1 des codes orthogonaux $C_0$ et $C_1$. De plus, chaque couple $C_0$, $C_1$ serait caractéristique de la $n^{ième}$ station mobile pour permettre une identification de ces stations.

La partie électronique du récepteur est représentée sur la figure 5.

Les signaux issus du photo-mélangeur 9 (voir également figure 2) effectuant la transposition optique-électrique sont préamplifiés par un amplificateur 31 puis filtrés par un filtre 32 dont la bande passante est adaptée à celle de l'ensemble des signaux à recevoir, augmentée du glissement Doppler maximal prévisible dû aux mouvements des stations mobiles. Un filtre de réjection 34 atténue la contribution, dans les signaux FI, des réflections parasites dans la voie optique.

Un second changement de fréquence, effectué au niveau d'un mélangeur 35, permet au reste de la chaîne de pouvoir travailler sur une fréquence intermédiaire $FI_2$ indépendante de l'effet Doppler, contrairement à ce qui serait le cas pour la fréquence intermédiaire FI. Un filtre 36, de bande passante juste égale à celle nécessaire pour passer l'ensemble des signaux utiles est alors prévu en sortie du mélangeur 35. Le signal de transposition appliqué à ce mélangeur 35 est obtenu de la façon suivante. Une analyse spectrale est effectuée sur les signaux à fréquence FI, grâce à un analyseur de spectre 49. Cette analyse spectrale permet de distinguer, dans le spectre des signaux FI, une fréquence fondamentale correspondant à la fréquence F + FD (où F est la fréquence porteuse d'émission, et FD la fréquence Doppler), transposée en fréquence intermédiaire, et toute une série de raies correspondant à la modulation.

Un décodeur 48 permet de sélectionner la composante fondamentale, et, la fréquence F d'émission étant connue, de déterminer la fréquence Doppler et d'élaborer une tension correspondante permettant de la compenser. Cette tension est appliquée à un oscillateur contrôlé en tension (VCO) 47, lequel fournit le signal de transposition appliqué au mélangeur 35.

La fréquence $FI_2$ ainsi obtenue est stabilisée par une boucle contenant un filtre 43 à bande étroite rejetant les bandes latérales de la modulation, un discriminateur de fréquence 44 et un intégrateur 45 dont la sortie commande l'oscillateur contrôlé en tension 47, par l'intermédiaire d'un sommateur 46 qui reçoit par ailleurs le signal issu du décodeur 48.

Des modules amplificateurs 33 sont par ailleurs prévus en différents points de la chaîne, afin d'isoler et/ou adapter en niveau les différents étages.

Les signaux portés par $FI_2$ sont ensuite détectés par un module de détection 37 puis délivrés à des décodeurs 38 constitués de filtres 39 et 40 accordés respectivement sur $f_{0n}$ et sur $f_{1n}$, de modules redresseurs intégrateurs 41 et d'un comparateur 42 à la sortie duquel le message transmis par la $n^{ième}$ station est disponible en format NRZ.

D'autre part, les signaux filtrés par les filtres 39 et 40 sont appliqués à un dispositif 50 d'élaboration de signaux d'écartométrie qui reçoit également les signaux de recopie des coordonnées des points balayés par le dispositif de balayage 14. Ce dispositif 50 élabore, à partir de ces données, les ordres d'écartométrie nécessaires à la poursuite de la $n^{ième}$ station mobile. Il s'agit d'une écartométrie du type "sur point brillant" comme décrit par exemple dans le brevet français n° 1504656 déposé au nom de la Demanderesse.

Dans le cas d'une modulation du type OOK les filtres tels que 39 et 40 seraient, à titre d'exemple remplacés par des corrélateurs.

Selon une variante de l'invention, le nombre de décodeurs 38 pourra être réduit à un seul. Les fréquences FSK $f_0$ et $f_1$ seront alors communes à toutes les stations mobiles qui devront alors faire précéder leur message d'un court préambule servant à les identifier.

On explique maintenant comment s'effectue la commande de l'orientation des n faisceaux, au fur et à mesure de l'évolution des stations mobiles, afin de rester en permanence pointés sur celles-ci.

Comme déjà indiqué, la station fixe émet en permanence en ondes entretenues pures. De même, chacune des cibles à poursuivre module en permanence son rétro-réflecteur selon le code d'identification qui lui a été attribué.

Le dispositif 2 de préacquisition des stations mobiles (figure 1) ayant prépositionné les miroirs et lames semi-transparentes 11 à 13 (figure 2), le dispositif de balayage 14 effectue une recherche en balayant, par exemple ligne à ligne, une aire d'étendue déterminée.

Le récepteur est alors en mesure de déterminer pour quelles coordonnées $(x_n, y_n)$ par rapport à un point 0 choisi comme origine de cette aire de balayage, le centre par exemple, une réponse identifiant la $n^{ième}$ station mobile à été reçue.

Le dispositif d'écartométrie 50 (figure 5) élabore alors les ordres de commande des miroirs de pointage tels que 11 à 13 pour ramener le faisceau issu de la $n^{ième}$ station mobile à un point $P_n$ choisi comme

position de référence relativement à cette station mobile (par exemple le centre de l'aire de balayage).

Ce processus s'effectue simultanément pour les n faisceaux, et continûment dans le temps afin de pouvoir recevoir des données au fur et à mesure de l'évolution des n stations mobiles. Cette réception se fait "au vol" c'est-à-dire au passage du $n^{ième}$ faisceau par les coordonnées $(x_n, y_n)$ pour lesquelles une réponse est détectée au cours d'un cycle de balayage, et se renouvelle à chaque cycle de balayage.

Afin d'éviter de recevoir simultanément des signaux venant des n stations mobiles au moment du passage du dispositif de balayage par le centre de la zone balayée, il est préférable de choisir une position de référence $P_n$ différente pour chacun des n faisceaux, à défaut de quoi la compensation de l'effet Doppler ne pourrait être faite convenablement dans la partie commune de la chaîne électronique de réception (les différentes stations mobiles n'ayant pas nécessairement la même vitesse). La réception des données en provenance des n stations mobiles est alors multiplexée dans le temps.

## Revendications

1. Système de recueil, par une station fixe, de données transmises par voie optique par n stations mobiles, caractérisé en ce qu'il comporte :

— dans la station fixe, une source d'émission unique (6), apte à générer une onde lumineuse de fréquence porteuse F, et un récepteur unique, associés à des moyens de multiplexage spatial ou temporel selon n faisceaux (17, 18, 19) respectivement affectés aux n stations mobiles, à des moyens (11, 12, 13) d'orientation de chacun de ces n faisceaux selon une direction de visée déterminée, et à des moyens de commande de ces moyens d'orientation, coopérant avec le récepteur unique, de manière à faire coïncider cette direction de visée avec la position de la station mobile correspondante au fur et à mesure de l'évolution de celle-ci ;

— dans chacune des stations mobiles, un rétro-réflecteur (27) associé à un modulateur (26) ayant une loi de modulation de la fréquence porteuse F décodable par le récepteur unique, et telle que les données ainsi transmises par chacune des stations mobiles puissent être individualisées.

2. Système selon la revendication 1, caractérisé en ce que les moyens de multiplexage spatial comportent une association (11, 12, 13) de lames semi-transparentes et de miroirs.

3. Système selon la revendication 2, caractérisé en ce que les moyens d'orientation consistent dans le fait que ces lames semi-transparentes et ces miroirs sont mobiles en site et gisement.

4. Système selon la revendication 1, caractérisé en ce que les moyens de multiplexage temporel comportent un dispositif (20) de déflexion statique rapide à accès aléatoire.

5. Système selon la revendication 1, caractérisé en ce que les moyens de multiplexage spatial comportent un ensemble assurant la division du faisceau émis et la recombinaison des faisceaux incidents.

6. Système selon la revendication 1, caractérisé en ce que les moyens d'orientation comportent un ensemble de miroirs (22, 13') mobiles en site et gisement, disposés en sortie des moyens de multiplexage spatial ou temporel.

7. Système selon la revendication 1, caractérisé en ce que les moyens de commande des moyens d'orientation comportent :

— des moyens (14) pour assurer continûment un balayage des n faisceaux émis selon une aire étendue déterminée ;

— des moyens pour déterminer à chaque cycle de balayage les coordonnées $(x_n, y_n)$ par rapport à un point 0 choisi comme origine de l'aire de balayage, pour lesquelles un signal provenant de chacune des n stations mobiles est détecté par le récepteur ;

— des moyens pour appliquer aux moyens d'orientation de faisceaux un décalage angulaire fonction des coordonnées $(x_n, y_n)$ ainsi détectées et permettant de ramener le faisceau issu de chacune des n stations mobiles à un point $P_n$ de l'aire de balayage choisi comme position de référence pour cette station mobile.

8. Système selon les revendications 4 et 7, caractérisé en ce que le balayage est assuré par le dispositif (20) de déflexion statique rapide à accès aléatoire.

9. Système selon la revendication 7, caractérisé en ce que, le balayage étant commun aux n faisceaux, le point de référence $P_n$ est choisi distinct pour chacune des n stations mobiles, afin d'assurer une réception multiplexée dans le temps des signaux en provenance de ces n stations.

10. Système selon l'une des revendications 1 à 9, caractérisé en ce que le récepteur unique comporte, en commun pour les n stations mobiles, des moyens, de détection (37), et, en amont de ceux-ci, des moyens (35, 47, 48, 49) de compensation de l'effet Doppler.

11. Système selon la revendication 10, caractérisé en ce que la compensation de l'effet Doppler est obtenue par battement avec une fréquence de transposition elle même obtenue par analyse spectrale des signaux reçus, puis détermination de la composante fondamentale du spectre ainsi obtenu, et soustraction à cette dernière d'une fréquence correspondant à la fréquence porteuse d'émission F.

12. Système selon la revendication 10, caractérisé en ce que le récepteur unique comporte, en aval des moyens de détection (37) communs aux n stations mobiles, n décodeurs (38) aptes à décoder chacun les données transmises par l'une des n stations mobiles.

13. Système selon les revendications 7 et 12, caractérisé en ce que le récepteur unique comporte également, en aval des moyens de détection (37) communs aux n stations mobiles, n dispositifs d'écartométrie (50) qui reçoivent chacun des informations d'une part du décodeur (38) de même rang n, et d'autre part des moyens de balayage (14).

14. Système selon l'une des revendications 1 à 13, caractérisé en ce que la loi de modulation est une loi du type à modulation par sauts de fréquence.

15. Système selon l'une des revendications 1 à 13, caractérisé en ce que la loi de modulation est une loi du type à modulation par tout ou rien.

**Patentansprüche**

1. Empfangssystem zum Empfangen von Daten in einer orstfesten Station, die auf optischem Wege von n mobilen Stationen ausgesendet wurden, dadurch gekennzeichnet, daß sie :

— in der ortsfesten Station eine einzige Sendequelle (6), die eine Trägerlichtwelle der Frequenz F erzeugen kann, und ein einziger Empfänger vorhanden sind, die mit Mitteln zum räumlichen oder zeitlichen Multiplexieren über n Strahlen (17, 18, 19), welche Je einer der n mobilen Stationen zugeteilt sind, mit Mitteln (11, 12, 13) zum Ausrichten Jedes der n Strahlen in eine bestimmte Zielrichtung, und mit Mitteln zum Steuern dieser Ausrichtmittel verbunden sind, welche mit dem einzigen Empfänger derart zusammenarbeiten, daß die Zielrichtung mit der Position der entsprechenden mobilen Station nach Maßgabe ihrer Positionsveränderung übereinstimmt,

— in jeder der mobilen Stationen eine Retro-Reflektor (27) vorhanden ist, der mit einem Modulator (26) verbunden ist, welcher nach einer vom einzigen Empfänger entschlüsselbaren Modulationsvorschrift für die Trägerfrequenz F arbeitet und so ausgebildet ist, daß die so von Jeder mobilen Station gesendeten Daten individualisiert werden kannen.

2. System nach Anspruch 1, dadurch gekennzeichnet, daß die räumlichen Multiplexiermittel eine Anordnung (11, 12, 13) von halbdurchscheinenden Platten und von Spiegeln aufweist.

3. System nach Anspruch 2, dadurch gekennzeichnet, daß die Ausrichtmittel darin bestehen, daß die halbdurchscheinenden Platten und die Spiegel in Elevations- und Azimutalrichtung beweglich sind.

4. System nach Anspruch 1, dadurch gekennzeichnet, daß die zeitlichen Multiplexiermittel eine schnelle statische Ablenkvorrichtung (20) mit freiem Zugriff aufweisen.

5. System nach Anspruch 1, dadurch gekennzeichnet, daß die räumlichen Multiplexiermittel eine Anordnung von Mitteln zum Teilen des ausgesandten Strahls und zum Rekombinieren der einfallenden Strahlen aufweisen.

6. System nach Anspruch 1, dadurch gekennzeichnet, daß die Ausrichtmittel eine Gruppe von Spiegeln (22, 13') aufweisen, die in Elevations- und Azimutalrichtung beweglich sind und am Ausgang der räumlichen oder zeitlichen Multiplexiermittel angeordnet sind.

7. System nach Anspruch 1, dadurch gekennzeichnet, daß die Mittel zur Steuerung der Ausrichtmittel

— Mittel (14) zum kontinuierlichen Abtasten der über einen bestimmten Ausdehnungsbereich ausgesandten n Strahlen,

— Mittel zum Bestimmen derjenigen Koordinaten $(x_n, y_n)$ in Bezug auf einen als Ursprungspunkt gewählten Nullpunkt in jedem Abtastzyklus, für die ein von jeder der n beweglichen Stationen kommendes Signal vom Empfänger erfaßt wird,

— Mittel zum Herbeiführen einer Winkelverschiebung bei den Strahlausrichtmitteln in Abhängigkeit von den so erfaßten Koordinaten $(x_n, y_n)$ aufweisen, die es gestatten, den von jeder der mobilen Stationen ausgehenden Strahl auf einen Punkt $P_n$ des Abtastbereichs zu lenken, der als Bezugspunkt für die betreffende mobile Station gewählt ist.

8. System nach den Ansprüchen 4 und 7, dadurch gekennzeichnet, daß die Abtastung durch die schnelle, statische Ablenkvorrichtung (20) mit freiem Zugriff erfolgt.

9. System nach Anspruch 7, dadurch gekennzeichnet, daß bei einer allen n Strahlen gemeinsamen Abtastung der Bezugspunkt $P_n$ für Jede der n mobilen Stationen unterschiedlich gewählt ist, um einen Zeitmultiplexempfang der von den n Stationen kommenden Signale zu gewährleisten.

10. System nach einem der Ansprüche 1 bis 9, dadurch gekennzeichnet, daß der einzige Empfänger für alle n mobilen Stationen gemeinsam Mittel (37) zur Erfassung und, diesen vorgeschaltet, Mittel (35, 47, 48, 49) zur Kompensation des Dopplereffekts aufweist.

11. System nach Anspruch 10, dadurch gekennzeichnet, daß die Kompensation des Dopplereffekts durch Überlagerung mit einer Umsetzfrequenz erzielt wird, die ihrerseits durch Spektral-analyse der empfangenen Signale, dann Bestimmung der Basiskomponente des so erhaltenen Spektrums und Subtraktion einer der Trägerfrequenz F der Sendeseite entsprechenden Frequenz erhalten wird.

12. System nach Anspruch 10, dadurch gekennzeichnet, daß der einzige Empfänger im Anschluß an die den n mobilen Stationen gemeinsamen Erfassungsmitteln (37) n Dekoder (38) aufweist, von denen jeder die von einer der n mobilen Stationen gesendeten Daten entschlüsseln kann.

13. System nach einem der Ansprüche 7 und 12, dadurch gekennzeichnet, daß der einzige Empfänger weiter im Anschluß an die den n mobilen Stationen gemeinsamen Erfassungsmitteln (37) n Abstandsmeßeinrichtungen (50) aufweist, die je Informationen einerseits vom Dekoder desselben Rangs n und andererseits von den Abtastmitteln (14) empfangen.

14. System nach einem der Ansprüche 1 bis 13, dadurch gekennzeichnet, daß die Modulationsvorschrift eine Vorschrift vom Typ der Modulation mit Frequenzsprüngen ist.

15. System nach einem der Ansprüche 1 bis 13, dadurch gekennzeichnet, daß die Modulationsvorschrift eine Vorschrift vom Typ Alles oder Nichts ist.

## Claims

1. A system for receiving in a fixed station data which are transmitted by n mobile stations via optical paths, characterized in that the system comprises :
— in the fixed station, a sole transmit source (6) adapted to generate a light wave having carrier frequency F, and a sole receiver, both associated with means (17, 18, 19) for space or time multiplexing along n beams and respectively allocated to n mobile stations, with means (11, 12, 13) for pointing each of said n beams in a determined sighting direction, and with means for controlling said pointing means which cooperate with the sole receiver so as to make said sighting direction coincide with the position of the corresponding mobile station as said position evolves,
— in each of the mobile stations a retro-reflector (27) associated to a modulator (26) operating according to a law of modulation of the carrier frequency F which is decodable by the sole receiver and is of a nature such that the data thus transmitted by each of the mobile stations can be individualized.

2. A system according to claim 1, characterized in that the space multiplex means comprise an assembly (11, 12, 13) of semi-transparent blades and of mirrors.

3. A system according to claim 2, characterized in that the pointing means consist in the arrangement of said semi-transparent blades and said mirrors which are mobile in the elevational and azimuthal direction.

4. A system according to claim 1, characterized in that the time multiplex means comprise a rapid random access static deflection device (20).

5. A device according to claim 1, characterized in that the space multiplex means comprise an assembly adapted to ensure the splitting of the emitted beam and the recombination of the incident beams.

6. A device according to claim 1, characterized in that the pointing means comprise an assembly of mirrors (22, 13') which are mobile in elevation and azimuth and are disposed at the output of the time or space multiplex means.

7. A device according to claim 1, characterized in that the means for controlling the pointing means include :
— means (14) for ensuring continuously a scanning of the n beams transmitted over a predetermined extended area,
— means for determining at each scanning cycle the coordinates $(x_n, y_n)$ relative to a zero-point selected as point of origine of the scanning area, for which coordinates a signal arriving from each of the n mobile stations is detected by the receiver,
— means for applying an angular shift to the beam pointing means, which is a function of the coordinates $(x_n, y_n)$ thus detected, and allowing to bring the beam issued from each of the n mobile stations to a point $P_n$ in the scanning area selected as a reference position for said mobile station.

8. A system according to claims 4 and 7, characterized in that the scanning is ensured by the rapid, static random access deflection device (20).

9. A system according to claim 7, characterized in that the scanning being common to the n beams, the reference point $P_n$ is chosen to be distinct for each of the n mobile stations, so as to ensure a time multiplexed reception of the signals arriving from said n stations.

10. A system according to any one of claims 1 to 9, characterized in that the sole receiver comprises in common for the n mobile stations detection means (37) and, upstream thereto, means (35, 47, 48, 49) for compensating the Doppler effect.

11. A system according to claim 10, characterized in that the compensation of the Doppler-effect is obtained by beating with a transposing frequency which in turn is obtained by spectral analysis of the received signals, then determination of the basic component of the spectrum thus obtained, and subtraction of a frequency which corresponds to the transmit carrier frequency F.

12. A system according to claim 10, characterized in that the sole receiver comprises, downstream from the detection means (37) common to the n mobile stations, n decoders (38), each adapted to decode the data transmitted by one of the n mobile stations.

13. A system according to claims 7 and 12, characterized in that the sole receiver further includes, downstream from the detection means (37) common to the n mobile stations, n distance measuring devices (50), each of which receives information from the decoder (38) having the same rank n, on the one hand, and from the scanning means (14) on the other hand.

14. A system according to one of claims 1 to 13, characterized in that the modulation law is a law of the type providing modulation by frequency jumps.

15. A system according to one of claims 1 to 13, characterized in that the modulation law is a law of the type providing modulation by on-off operation.

# FIG_1

# FIG_4

Modulateur

Polariseur

Transcodeur

# FIG_2

FIG_3

Déflecteur
statique

Téléscope

FIG_5